# FASCICULE DE BREVET EUROPEEN

(11) **EP 2 015 973 B1**
(45) Date de publication et mention de la délivrance du brevet: **23.12.2009**
(21) Numéro de dépôt: 07727868.7
(22) Date de dépôt: 05.04.2007
(51) Int. Cl.: B60T 13/575

(54) **SERVOFREIN A RAPPORT D'ASSISTANCE VARIABLE**
SERVOBREMSE MIT VARIABLEM VERSTÄRKUNGSVERHÄLTNIS
SERVO BRAKE WITH VARIABLE ASSISTANCE RATIO

(30) Priorité: 19.04.2006 FR 0603764
(43) Date de publication de la demande: 21.01.2009
(73) Titulaire: Robert Bosch GmbH, 70442 Stuttgart (DE)
(72) Inventeur: SPROCQ, Raynald, 77450 Esbly (FR); ATTARD, Jean-Marc, 60340 Villers Sous St Leu (FR)
(74) Mandataire: Hurwic, Aleksander Wiktor
(86) Numéro de dépôt international: PCT/EP2007/053400
(87) Numéro de publication internationale: WO 2007/118809

(56) Documents cités:
- WO-A2-02/064411
- DE-A1- 19 757 352
- DE-A1- 19 917 281
- DE-A1- 19 941 466

## Description

La présente invention se rapporte principalement à un servofrein d'assistance au freinage à rapport d'assistance variable, à un organe de sortie et à un dispositif de réaction d'un tel servofrein. Elle s'applique notamment au domaine des systèmes de freinage de véhicules.

Un servofrein d'assistance au freinage est utilisé dans un véhicule pour amplifier automatiquement une commande de freinage générée soit par le conducteur soit par un dispositif automatique, afin d'assurer un freinage adéquat de ce véhicule.

L'art antérieur comporte de nombreuses descriptions de servofreins.
Le document WO-02/064411-A2 décrit un servofrein avec les caractéristiques du préambule de la revendication 1, un organe de sortie avec les caractéristiques du préambule de la revendication 8 et un dispositif de réaction avec les caractéristiques du préambule de la revendication 10.

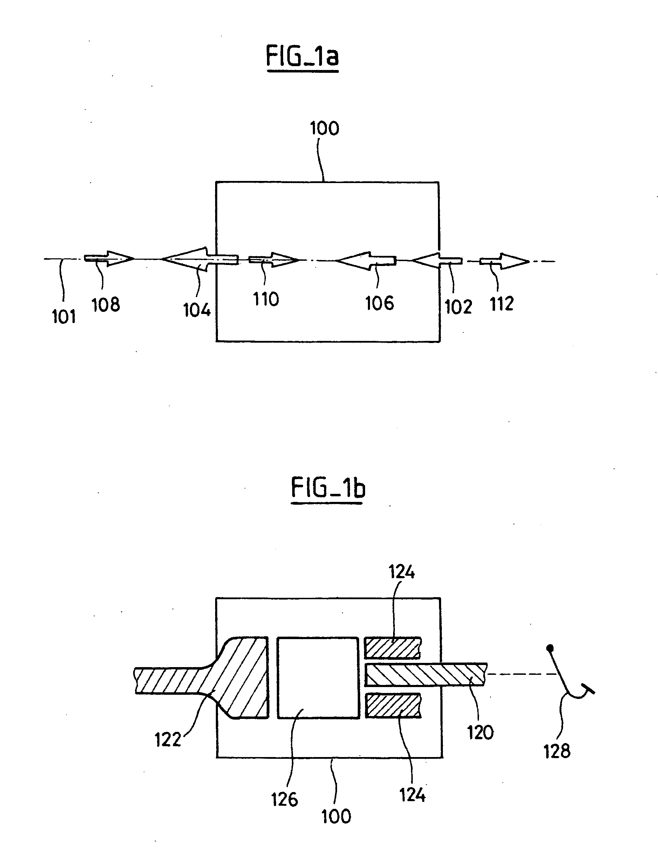

De façon schématique, comme représenté sur la figure 1a qui est un schéma des forces agissant dans un servofrein 100, et la figure 1b qui est un schéma des organes du servofrein exerçant ou subissant ces forces, un servofrein 100 peut être décrit comme un dispositif qui:
- reçoit une force de commande 102 en entrée à travers un organe d'entrée 120 (en général une tige de commande associée à des moyens de distribution),
- génère et ajoute une force d'assistance 106 au travers d'un organe d'assistance 124 (en général un piston) en fonction de l'intensité de la force de commande 102, le long de son axe 101,
- fournit une force de sortie assistée 104 en sortie à un organe de sortie 122 (en général une tige de poussée).

L'organe de sortie 122 applique la force de sortie 104 à un autre dispositif (en général un maître-cylindre), qui renvoie une force de réaction 108 au servofrein 100 par l'intermédiaire de l'organe de sortie 122.

Cette force de réaction 108 se décompose ensuite en une partie remontant à l'organe d'assistance 124, dénommée force de réaction absorbée 110, et en une autre partie à l'organe d'entrée 120, dénommée force de résistance 112.

Ce transfert des forces entre l'organe d'entrée 120, l'organe d'assistance 124 et l'organe de sortie 122 se fait à travers un dispositif de réaction 126 qui comprend en général un élément de réaction élastique (par exemple un disque en caoutchouc) et qui marque, dans l'art antérieur, une frontière entre les organes situés de l'un ou l'autre côté de ce dispositif de réaction 126.

Si le servofrein 100 est utilisé pour assister un freinage commandé par une pédale 128 actionnée par le pied d'un conducteur, ce dispositif de réaction 126 permet au conducteur d'avoir un retour de sensations et donc d'informations au niveau du pied ; ces sensations lui permettent d'ajuster l'intensité de la force qu'il exerce sur la pédale 128 et donc l'intensité de la force de commande 102.

L'intensité de la force de résistance 112 va notamment s'opposer à la force qu'il exerce sur la pédale 128 pour commander le freinage.

On définit un rapport, dénommé rapport d'assistance, égal au rapport de l'intensité de la force de sortie 104 (dividende) sur l'intensité de la force de commande 102 (diviseur).

Plus ce rapport est élevé, plus il est facile pour le conducteur de freiner.

Il est alors intéressant de concevoir un servofrein dont le rapport d'assistance augmente quand l'intensité de la force de commande 102 devient importante pour aider le conducteur lors d'un freinage important.

L'art antérieur propose plusieurs solutions techniques à ce problème, notamment la demande internationale ayant comme numéro de publication WO02/064411A2.

Cette demande internationale propose une solution qui fait coopérer l'élément de réaction élastique avec un organe de changement de rapport d'assistance au freinage ou organe de délestage, comprenant des moyens mobiles venant, au delà d'un certain seuil d'intensité de la force de commande, s'appuyer sur une butée de délestage (référence 11 de la figure 1 de la demande précitée) usinée ou fixée à l'intérieur du boîtier de contrôle, dénommé aussi organe d'assistance ou piston du servofrein, afin notamment de transformer, une partie de la force de résistance 112 en force de réaction absorbée 110 supplémentaire.

L'effet de seuil est obtenu par l'utilisation de moyens élastiques pré-contraints qui ne peuvent se comprimer qu'au delà d'un seuil d'intensité de force reçue.

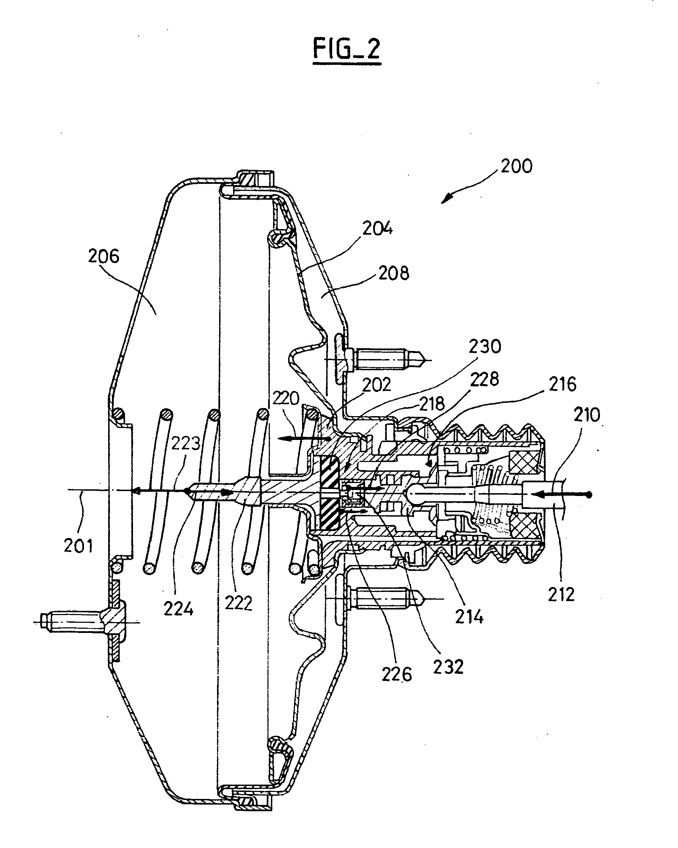

La demande WO02/064411A2 indique qu'il est important de guider les moyens mobiles qu'elle met en oeuvre et propose pour cela d'usiner des cannelures à l'intérieur de l'organe d'assistance (voir la figure 2 de cette demande).

La présente invention résulte de deux constatation

Premièrement, la solution de l'art antérieur pour la conception d'un servofrein dont le rapport d'assistance augmente au delà d'une certaine intensité de la force de commande du freinage implique l'usinage ou la fixation d'une butée interne précise et/ ou l'usinage de cannelures à l'intérieur de l'organe d'assistance, ce qui augmente le coût global du servofrein.

Deuxièmement, il serait intéressant pour aider le conducteur que le rapport d'assistance au freinage varie non seulement au delà d'une certaine intensité de la force de commande mais aussi dès le début d'un freinage d'urgence, c'est à dire lorsqu'on commande un freinage important en un temps très court.

Cette invention propose une solution au problème de la complexité, et donc du coût, des servofreins à variation de rapport d'assistance de l'art antérieur utilisant une butée usinée ou fixée à l'intérieur de l'organe d'assistance.

Cette invention propose aussi une solution au problème d'augmenter le rapport d'assistance au freinage dès le début d'un freinage d'urgence.

Cette invention concerne un servofrein d'assistance au freinage ayant un axe qui, sous la commande d'une force de commande axiale, génère une force de sortie assistée axiale, la force de commande étant exercée par un organe de délestage sur une surface de commande d'une face d'entrée d'un élément de réaction élastique, pour que sa face opposée de sortie exerce une force de sortie axiale sur un organe de sortie.

Un tel servofrein est caractérisé en ce que l'organe de sortie contient des moyens de prolongation traversant l'élément de réaction et comprenant au moins une butée pour retenir des moyens mobiles de l'organe de délestage afin de réduire la surface de commande quand l'intensité de la force de commande dépasse un seuil de commande ou quand la vitesse d'application de cette force de commande dépasse un seuil de vitesse.

L'invention implique qu'il est possible de réduire la surface de commande de la face d'entrée de l'élément de réaction recevant la force de commande au delà de certains seuils qui peuvent être prévus à la conception du servofrein, en délestant une partie des efforts que les moyens mobiles et l'organe de délestage s'appliquent mutuellement en dessous des seuils, sur l'organe de sortie par l'intermédiaire d'une butée solidaire de cet organe de sortie.

La butée n'est pas fixée à un organe d'assistance du servofrein qui exerce la force d'assistance sur une surface d'assistance de la face d'entrée de l'élément de réaction.

L'élément de réaction élastique se comporte sensiblement comme un liquide incompressible. Généralement, il est logé dans un logement fermé d'un côté par l'organe d'assistance apportant la force d'assistance et par l'organe de délestage, et de l'autre côté par l'organe de sortie.

Le rapport d'assistance, défini comme le rapport de l'intensité de la force de la sortie par l'intensité de la force d'entrée, est aussi égal au rapport de la surface sur laquelle l'élément de réaction exerce la force de sortie, dénommée surface de sortie, sur l'organe de sortie sur la surface de commande.

Grâce à cette invention, il n'est donc plus nécessaire d'usiner ou de fixer de butée à l'intérieur de l'organe d'assistance pour réaliser un servofrein à rapport d'assistance variable, car ce résultat est obtenu avec une butée solidaire de l'organe de sortie par l'intermédiaire des moyens de prolongation propres à l'invention.

L'invention simplifie la fabrication des servofreins et diminue leur prix de revient.

Les moyens de prolongation peuvent être avantageusement rigides pour que l'effort axial subit par la butée soit intégralement répercuté sur l'organe de sortie.

Grâce à cette invention, il est aussi possible de concevoir un servofrein qui change de rapport d'assistance selon un ou deux paramètres, l'intensité de la force de commande et/ou la vitesse de son application (ce dernier paramètre de changement de rapport étant propre à cette invention).

Le conducteur est donc aidé notamment lors d'un freinage d'urgence impliquant une vitesse de freinage élevée.

La force de commande peut être appliquée à l'organe de délestage par un moyen de distribution commandant aussi l'assistance du servofrein, ce moyen de distribution recevant cette même force de commande d'une tige de commande.

Dans une réalisation, les moyens mobiles de l'organe de délestage comprennent un anneau formant en partie une face de contact de l'organe de délestage en vis-à-vis axial avec une partie de la face d'entrée de l'élément de réaction et coulissant axialement sur les moyens de prolongation.

Les moyens mobiles sont donc guidés avantageusement par les moyens de prolongation sur lesquels ils coulissent : il n'est pas nécessaire, grâce à cette invention d'usiner des cannelures ou des rainures à l'intérieur de l'organe d'assistance.

Les moyens mobiles peuvent se déplacer axialement avec le reste de l'organe de délestage ou/et par rapport à l'organe de délestage.

Selon une réalisation, l'organe de délestage contient des moyens élastiques pré-contraints pour exercer une force de rappel axiale sur les moyens mobiles, orientée vers l'élément de réaction sur l'anneau.

Les moyens élastiques permettent d'obtenir deux effets techniques avantageux.

D'abord, comme ils sont pré-contraints, il faut un certain niveau de force de compression, opposée à leur charge quand le servofrein est au repos, pour les comprimer, ce qui apporte l'effet de seuil d'intensité de la force de commande.

Deuxièmement, quand les moyens mobiles sont déplacés par rapport à l'organe de délestage, la force de rappel des moyens élastiques va ramener les moyens mobiles, par ailleurs comprenant une butée les empêchant de sortir de l'organe de délestage, à leur position initiale une fois que la cause de leur déplacement par rapport à l'organe de délestage disparaît.

Dans une réalisation, les moyens de prolongation comprennent une butée d'intensité constituée d'une saillie radiale des moyens de prolongation pour retenir axialement les moyens mobiles quand l'intensité de la force de commande dépasse le seuil de commande et les moyens mobiles, subissant une pression de la partie de la face d'entrée de l'élément de réaction qui leur est en vis-à-vis axial, compriment les moyens élastiques en rentrant dans l'organe de délestage.

Grâce à la butée d'intensité, l'invention permet avantageusement de provoquer une augmentation du rapport d'assistance, en faisant diminuer la surface de commande, quand l'intensité de la force de commande dépasse le seuil de commande.

En effet, au delà du seuil, l'effort de la pression interne à l'élément élastique s'appliquant axialement sur les moyens mobiles devient supérieur à la charge au repos (ou à sa valeur de pré-contrainte) des moyens élastiques. La pression interne à l'élément élastique est fonction de l'intensité de la force de commande, ce qui permet de prévoir le seuil de commande à partir duquel augmente le rapport d'assistance.

Selon une réalisation, les moyens de prolongation comprennent un élément cylindrique, coaxial avec l'axe, dont une extrémité est fixée à la partie de l'organe de sortie en vis-à-vis axial de la face de sortie de l'élément de réaction, le corps de cet élément cylindrique traversant l'élément de réaction et le côté de l'organe de délestage en vis-à-vis axial de l'élément de réaction, l'élément cylindrique présentant un renflement, dénommé tête, à son autre extrémité selon l'axe, la tête étant la butée d'intensité et étant logée à l'intérieur de l'organe de délestage.

On obtient ainsi une solution avantageusement simple et peu coûteuse pour réaliser les moyens de prolongation.

Cet élément cylindrique peut être par exemple une vis qui est vissée dans un trou taraudé de l'organe de sortie.

Mais cet élément cylindrique peut aussi être fixé à l'organe de sortie par d'autres procédés que le vissage comme le sertissage, encliquetage ou collage.

Dans une réalisation, les moyens de prolongation comprennent une butée de vitesse pour éviter que les moyens mobiles viennent au contact de la face d'entrée de l'élément de réaction en les retenant lors d'un freinage, dénommé freinage à haute vitesse de commande, où l'organe de délestage, poussé par un moyen de distribution, qui lui transmet la force de commande, parcourt au moins en partie la distance le séparant au repos de l'élément de réaction, avant que ce dernier ne vienne, par déformation sous l'effet d'une force d'assistance générée par le servofrein, au contact de l'organe de délestage.

L'invention permet avantageusement de réaliser des servofreins dont le rapport d'assistance augmente lorsque la vitesse d'application de la force de commande dépasse un seuil définit dans cette même invention. Ce type de freinage est aussi dénommé freinage d'urgence.

Lorsque la force de commande qui agit sur l'organe de délestage est appliquée lentement (pas de freinage d'urgence),ce dernier ne se déplace pratiquement pas par rapport à l'organe d'assistance qui avance en même temps que lui.

L'organe d'assistance exerce alors une force d'assistance sur l'élément de réaction qui tend à se déformer et à venir occuper l'espace qui le sépare au repos de l'organe de délestage.

Lors d'un freinage à haute vitesse de commande ou freinage d'urgence, l'organe de délestage se déplace par rapport à l'organe d'assistance et vient au contact de l'élément de réaction dans un temps plus court qu'une constante de réaction du servofrein égal au temps nécessaire au servofrein de générer une force d'assistance à partir du moment où il reçoit une force de commande, d'appliquer la force d'assistance sur l'élément de réaction et de le déformer.

Lors d'un freinage d'urgence, l'organe de délestage avance vers l'élément de réaction dans le référentiel de l'organe d'assistance et sa face de contact entre en contact avec la surface d'entrée de l'élément de réaction.

La butée de freinage à haute vitesse de commande conforme à l'invention, disposée sur les moyens de prolongation entre les cotes axiales de la face de contact de l'organe de délestage au repos et de la face d'entrée de l'élément de réaction au repos, empêche les moyens mobiles de venir en contact avec l'élément de réaction.

Le freinage d'urgence ayant normalement une grande intensité non dosée, les moyens élastiques tendant à ramener l'anneau sur la face de contact de l'organe de délestage se compriment (la pré-contrainte ou charge au repos est alors plus petite que la force de compression qu'ils subissent).

La surface de commande sur l'élément de réaction est donc réduite et le rapport d'assistance augmente.

La hauteur de la butée de vitesse est suffisamment petite radialement pour ne pas arrêter l'ensemble de l'organe de délestage (c'est à dire inférieure au diamètre extérieur des moyens mobiles).

La hauteur de la butée de vitesse peut être faible par rapport à l'épaisseur des moyens mobiles pour ne pas interférer dans un freinage dont la vitesse d'application est inférieure au seuil de vitesse.

On peut notamment concevoir grâce à l'invention des moyens de prolongation :
- comportant une butée d'intensité exclusivement,
- comportant une butée de vitesse ou
- comportant une butée d'intensité et une butée de vitesse.

Selon une réalisation, les moyens de prolongation comprennent une saillie cylindrique creuse de la face de l'organe de sortie en vis-à-vis axial avec la face de sortie de l'élément de réaction, la saillie cylindrique creuse étant coaxiale avec l'axe, traversant l'élément de réaction et logeant en partie un élément cylindrique fixé à la partie de l'organe de sortie en vis-à-vis axial de la face de sortie de l'élément de réaction, élément cylindrique sur lequel coulissent les moyens mobiles de l'organe de délestage, la saillie cylindrique creuse ayant une longueur telle que, au repos du servofrein, l'extrémité libre de cette saillie cylindrique creuse soit comprise entre la face d'entrée de l'élément de réaction et les moyens mobiles, l'extrémité libre étant la butée de vitesse.

Ainsi la différence d'épaisseur entre la saillie et l'élément cylindrique est suffisante pour que les moyens mobiles puissent coulisser sur l'élément cylindrique mais soient arrêtés dans leur course vers l'élément de réaction, lors d'un freinage à haute vitesse de commande.

L'épaisseur radiale de la saillie cylindrique peut être faible par rapport à l'épaisseur de l'anneau compris dans les moyens mobiles pour ne pas interférer dans un freinage dont la vitesse d'application est inférieure au seuil de vitesse : en effet elle subit de la part des moyens mobiles lors d'un freinage d'urgence, un effort axial où son épaisseur n'intervient pratiquement pas.

Cette réalisation de l'invention permet ainsi de réaliser une butée de freinage à haute vitesse d'application de façon précise, aisée et de faible coût car le positionnement axial de la butée dépend de la longueur de la saillie cylindrique creuse.

On peut remarquer que l'élément cylindrique de cette dernière réalisation peut être l'élément cylindrique d'une réalisation précédemment décrite ayant une tête à l'une de ses extrémité.

Ainsi, on obtient sur les mêmes moyens de prolongation une butée d'intensité et une butée de vitesse.

L'invention concerne aussi un organe de sortie d'un servofrein d'assistance au freinage recevant d'une face de sortie d'un élément de réaction élastique compris dans un dispositif de réaction du servofrein, une force de sortie issue de la pression interne de cet élément de réaction soumis sur sa face opposée d'entrée à une force de commande commandant le servofrein sur une surface de commande et une force d'assistance générée par le servofrein.

Un tel organe de sortie est caractérisé en ce qu'il contient des moyens de prolongation traversant l'élément de réaction pour coopérer avec un organe de délestage exerçant la force de commande sur la face d'entrée de l'élément de réaction afin de réduire la surface de commande quand l'intensité de la force de commande dépasse un seuil de commande ou quand la vitesse d'application de cette force de commande dépasse un seuil de vitesse.

Dans d'autres réalisations, l'organe de sortie est conforme à un organe de sortie compris dans un servofrein conforme à l'une des réalisations précédentes de l'invention.

L'invention concerne aussi un dispositif de réaction d'un servofrein d'assistance au freinage, le dispositif de réaction contenant un élément de réaction élastique et un organe de délestage qui, le long de l'axe du servofrein, reçoit une force de commande du servofrein pour l'exercer par son côté de contact sur une surface en vis-à-vis de commande d'une face d'entrée de l'élément de réaction qui exerce, sur sa face opposée de sortie, une force de sortie à un organe de sortie.

Un tel dispositif de réaction est caractérisé en ce que le côté de contact de l'organe de délestage comprend des moyens mobiles axialement qui, au delà d'un seuil d'intensité de la force de commande, dénommé seuil de commande, ou d'un seuil de vitesse d'application de la force de commande, dénommé seuil de vitesse, sont retenus, afin de réduire la surface de commande, par au moins une butée saillante sur des moyens de prolongation de l'organe de sortie traversant axialement l'élément de réaction.

Dans d'autres réalisations, le dispositif de réaction est conforme à un dispositif de réaction compris dans un servofrein conforme à l'une des réalisations précédentes de l'invention.

D'autres caractéristiques et avantages de l'invention apparaîtront dans la description ci-dessous, à titre non limitatif, en référence aux figures ci-jointes sur lesquelles :
- Les figures 1a et 1b, déjà décrites ci-dessus, représentent schématiquement et respectivement un jeu de forces agissant sur un servofrein et des éléments matériels exerçant ou subissant ces forces,
- La figure 2 représente une vue schématique d'un servofrein conforme à l'invention,
- Les figures 3a, 3b, 3c et 3d représentent une section schématique' d'une réalisation d'un dispositif de réaction conforme à l'invention dans différents états (au repos et lors de différents types de freinage),
- La figure 4 représente une courbe schématique montrant l'évolution d'une pression de liquide de frein en fonction de la force de commande appliquée à un servofrein propre à l'invention.

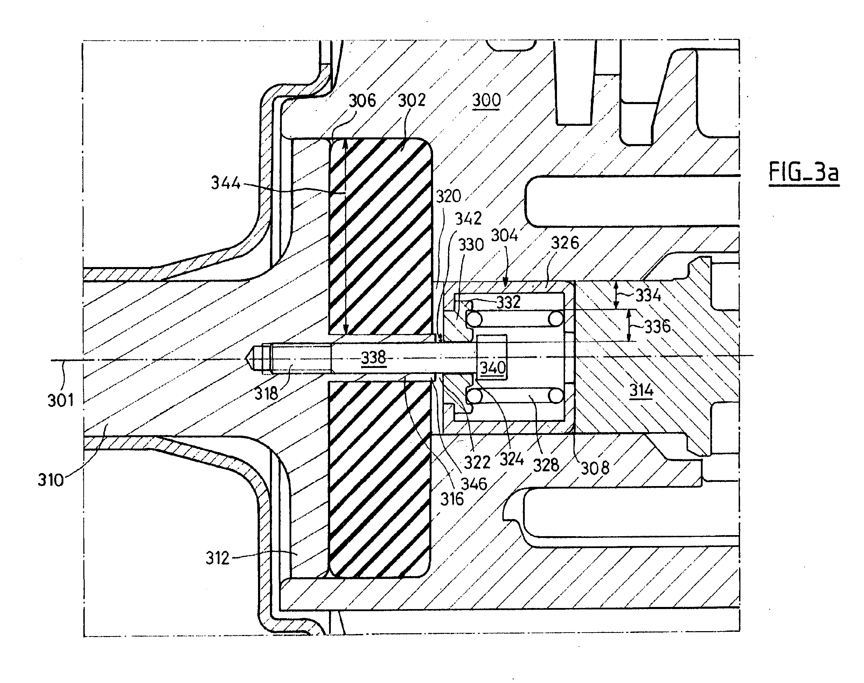

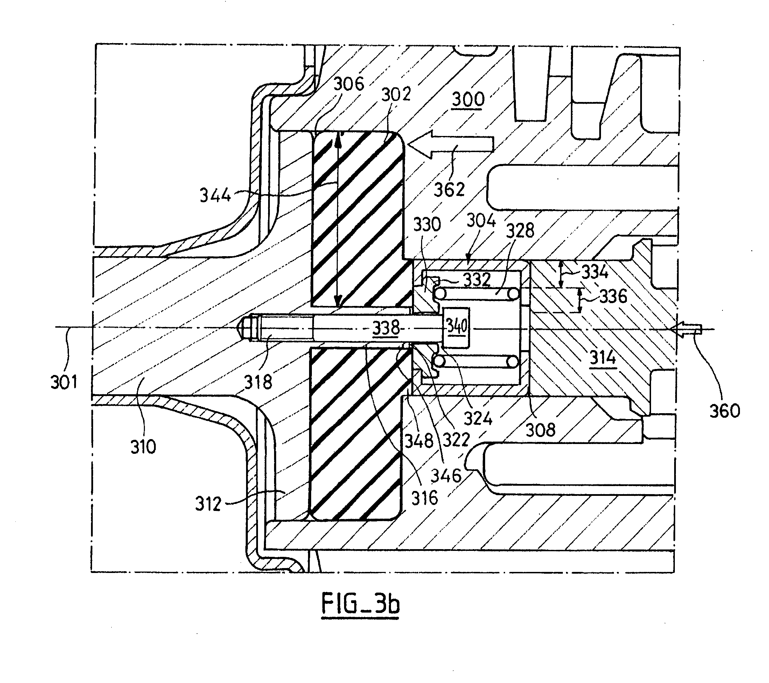

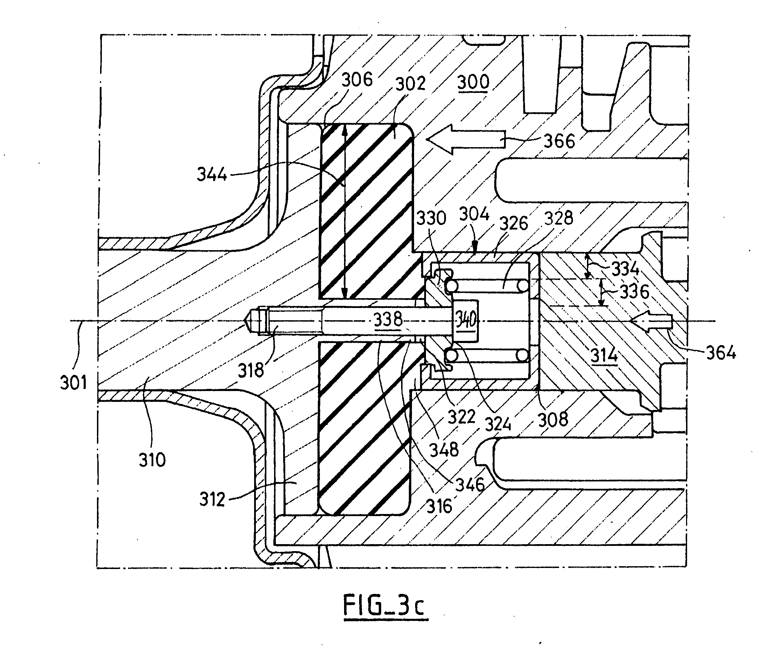

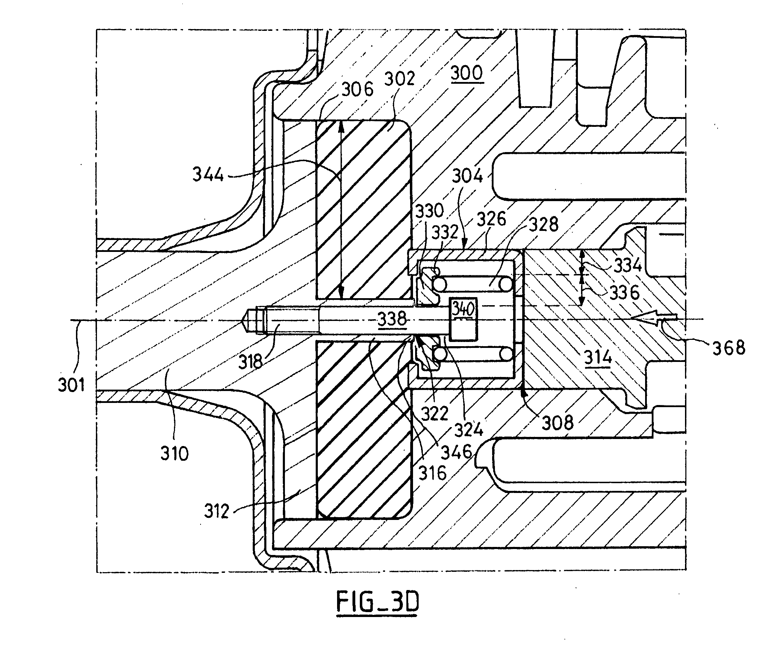

Un réalisation de l'invention décrite schématiquement ci-dessus grâce aux figures 2, 3a, 3b, 3c et 3d résout notamment les deux problèmes soulevés par l'art antérieur.

Les flèches représentant des forces sont indicatives et ne sont pas en proportionnelles les unes par rapport aux autres.

La figure 2 représente une vue schématique en coupe d'une réalisation d'un servofrein 200 conforme à l'invention contenant un dispositif de réaction 218 conforme à l'invention.

Dans une telle réalisation de l'invention, l'organe d'assistance est un piston 202 de même axe 201 que celui du servofrein 200 et coopérant avec une jupe 204 sertie sur le piston 202.

Elle sépare l'intérieur du servofrein en une chambre avant 206 et une chambre arrière 208, la chambre avant 206 étant maintenue en dépression de façon permanente par des moyens non représentés.

La chambre avant 206 est reliée à la chambre arrière 208 par une voie d'une valve à trois voies comprise dans le piston 200.

Dans cette réalisation, une force de commande 210 est exercée, lors d'un freinage, sur le servofrein par une tige de commande 212 et notamment sur un organe d'entrée dénommé moyen de distribution 214.

Ce moyen de distribution 214 l'applique à son tour au dispositif de réaction 218 et plus précisément à un organe de délestage 232 du dispositif de réaction 218, tout en ouvrant un clapet 216 de la valve à trois voies.

Conformément à l'invention, le dispositif de réaction 218 comprend aussi un élément de réaction élastique qui est dans cette réalisation un disque de réaction 230 en caoutchouc.

Le disque 230 de réaction est logé dans un alésage à l'extrémité gauche (selon la figure 2) du piston 202 qu'il remplit. Grâce à son élasticité, il a un comportement similaire à celui d'un liquide incompressible quand il est soumis à des forces : sa pression interne augmente mais son volume global, même si il se déforme, reste constant.

Conformément à l'invention, le disque de réaction 202 a deux faces perpendiculaires à l'axe 201 du servofrein : une face d'entrée orientée vers l'organe de délestage et une face de sortie, orientée vers un organe de sortie qui est dans cette réalisation une tige de poussée 222.

L'ouverture du clapet 216 fait rentrer l'air à la pression atmosphérique dans la chambre arrière 208 et ferme la voie reliant la chambre arrière 208 à la chambre avant 206 qui introduit la dépression dans la chambre arrière 208.

La différence de pression entre la chambre avant 206 et la chambre arrière 208 crée alors une force d'assistance 220 s'appliquant sur la jupe 204 et donc sur le piston 200.

Le piston 200 applique alors cette force d'assistance 220 au dispositif de réaction 218 et plus précisément sur une surface annulaire du disque de réaction 230.

Une force de sortie assistée 223, issue de la transmission de la force d'assistance 220 et la force de commande 210 par le dispositif de réaction 218, est alors exercée sur la tige de poussée 222, puis transmise par cette dernière à un maître-cylindre non représenté

Le maître-cylindre permet alors d'appliquer la force de freinage assisté 223 qui lui est transmise par la tige de poussée 222, à un liquide de frein afin d'augmenter sa pression.

Une force de réaction 224 est exercée en retour du maître-cylindre sur la face de sortie du disque de réaction 230 du servofrein 200 à travers la tige de poussée 222 : elle a un sens opposé à celui de la force de sortie 223.

Le disque de réaction 230 transmet une partie 226 de la force de réaction, dénommée force de réaction absorbée, au piston 202 du servofrein 200,

L'organe de délestage transmet une autre partie 228 de la force de réaction 224, dénommée force de résistance, au moyen de distribution 214.

La force de résistance 228 transmise au moyen de distribution 214 est responsable notamment de la résistance ressentie par le conducteur qui appuie sur une pédale de frein directement reliée à la tige de commande 212 lors d'un freinage commandé par le pied de ce conducteur.

La figure 3a est un agrandissement schématique de la figure 2 autour du dispositif de réaction 218 de la figure 2 lorsque que le servofrein 200 est au repos.

Le disque de réaction 302 occupe l'alésage cylindrique 306 compris à l'extrémité du corps du piston 300 orienté vers la tige de poussée 310.

Cet alésage cylindrique 306 est fermé par une face orientée vers la face de sortie du disque de réaction du pied 312 de la tige de poussée 310.

Conformément à l'invention, la tige de poussée 310 comprend des moyens de prolongation rigides, prolongeant axialement en son centre le pied 312 de la tige de poussée 310 au travers du disque de réaction 302, qui comprennent, dans cette réalisation, une saillie cylindrique 316 creuse traversant le centre du disque de réaction 302.

Un élément cylindrique, qui est dans cette réalisation une vis 318, est logée dans la saillie cylindrique 316 et montée vissée dans un trou taraudé de la tige de poussée 312.

Dans cette réalisation, cette vis 318 a un renflement à son extrémité opposée à celle qui est vissée, la tête 340 de vis cylindrique.

La face du pied 312 de la tige de poussée 310 reçoit donc la force de freinage assistée et exerce la force de réaction sur une surface annulaire 344 de sa face de sortie qui est la surface de la section de l'alésage cylindrique 306 moins la surface circulaire de la section de la saillie cylindrique 316.

Un conduit 308 coaxial avec l'alésage cylindrique 306 et traversant le corps du piston 300 débouche dans l'alésage cylindrique 306.

L'extrémité libre 346 de la saillie cylindrique 316 dépasse légèrement de la face d'entrée du disque de réaction 302 pour rentrer légèrement dans le conduit 308, sans toucher l'organe de délestage 304 quand ce dernier est au repos. En effet, il existe au repos un espace 320 entre la face d'entrée du disque de réaction 302 et la face de contact, en vis-à-vis suivant l'axe 301, de l'organe de délestage 304.

L'organe de délestage 304 peut coulisser dans le conduit 308 poussé sur son côté d'entrée opposée à sa face de contact par le moyen de distribution 314 qui coulisse aussi dans le conduit 308.

L'organe de délestage 314 comprend une enveloppe 326 tubulaire. Le côté d'entrée de l'organe de délestage 314 est évidée en son centre pour permettre le passage de la tête 340 de vis.

La face de contact comprend une surface 334 annulaire radiale en vis-à-vis du disque de réaction 302 et, au centre de cette surface annulaire radiale, un anneau 330, conforme à l'invention, qui est coaxial à l'enveloppe 326 et mobile par rapport à cette dernière.

Cet anneau 330 est, au repos, plaqué par des moyens élastiques 328 pré-contraints et compris dans l'organe de délestage 304, contre la surface annulaire radiale. Dans cette réalisation, ces moyens élastiques comprennent un ressort 328.

Ce ressort 328 est fixé sur le côté interne du côté d'entrée de l'organe de délestage 314 et sur le côté interne de l'anneau 330.

Une butée 332 empêche l'anneau 330 de sortir de l'organe de délestage 304. Il peut cependant coulisser axialement à l'intérieur de l'enveloppe 326 s'il est soumis à une force axiale de sens opposée et supérieure à la force de pré-contrainte du ressort 328 et si l'organe de délestage 304 subit une force opposée suffisante sur son côté d'entrée.

Au repos, la surface 336 radiale annulaire de l'anneau est contiguë à la surface annulaire 334. Cette surface 336 est en vis-à-vis d'une partie du disque de réaction 302 et de l'extrémité libre 346 de la saillie 316 annulaire sur sa surface annulaire 342.

La vis 318 a une longueur suffisante pour que son corps 338 traverse le disque de réaction 302 (à l'intérieur de la saillie cylindrique 316) et l'anneau mobile 330, et pour que sa tête cylindrique 340, de diamètre radial supérieur à celui de son corps 338, soit logée à l'intérieur de l'enveloppe 326 tubulaire et réalise la fonction de butée de délestage ou butée d'intensité conforme à l'invention pour l'anneau 330 si le ressort 328 se comprime.

D'ailleurs, l'anneau 330 coulisse le long du corps 338 de la vis 318.

On remarque que, par rapport à l'art antérieur cité auparavant, l'anneau 330 n'est pas en contact avec la surface interne du conduit 308.

Au repos, un jeu, dénommé jeu de vitesse 322, existe selon l'axe 301 entre l'extrémité 346 de la saillie 316 et l'anneau 330.

Un autre jeu 324, dénommé jeu d'intensité ou jeu de délestage, existe selon l'axe 301 entre l'anneau 330 et la tête 340 de la vis 318.

La figure 3b montre schématiquement l'état de ce même dispositif de réaction et des éléments coopérant avec ce dernier nécessaires à la compréhension de l'invention, lors d'un freinage commandé avec une intensité de la force de commande 360 inférieure à un seuil d'intensité et avec une vitesse d'application inférieure à un seuil de vitesse.

Le seuil d'intensité dépend directement de la charge du ressort, c'est à dire de la force nécessaire pour comprimer le ressort 328 pré-contraint et peut donc être fixé avantageusement à la conception du dispositif de réaction et du servofrein conformes à l'invention.

Le moyen de distribution 314 reçoit, lors d'un freinage, la force de commande 360 qu'il exerce alors sur le côté d'entrée de l'organe de délestage 304.

En même temps, le clapet de la valve à trois voies s'ouvre comme décrit ci-dessus (voir description de la figure 2) et le piston 300 exerce une force d'assistance 362 sur une surface annulaire de la face d'entrée du disque de réaction 302.

Comme le disque de réaction 302 réagit alors de façon similaire à un liquide incompressible, il se déforme élastiquement de façon à s'amincir sur sa partie annulaire soumise directement à la pression du corps du piston 300, il envahit sur un volume 348 le conduit 308 et fait disparaître l'espace 320 de la figure 3a qui sépare au repos le disque de réaction 302 de l'organe de délestage 304.

Le disque de réaction 302 vient alors au contact de la face de contact de l'organe de délestage, c'est à dire de la surface annulaire 334 et de la surface annulaire 336 de l'anneau 332 (l'épaisseur radiale de la saillie cylindrique 316 étant négligeable dans cette réalisation par rapport à la surface 336).

En dessous du seuil d'intensité, ces deux surfaces sont contiguës et se comportent comme une surface unie transmettant la force de commande et recevant la force de résistance. L'ensemble de ces deux surfaces forment donc la surface de commande telle que définie dans l'invention.

Les jeux de vitesse 322 et de d'intensité 324 existent dans cette configuration du dispositif de réaction.

Le rapport d'assistance de ce servofrein, quand l'intensité de la force de commande est en-dessous du seuil d'intensité et la vitesse d'application de la force de commande est inférieure au seuil de vitesse, est alors le rapport entre la force de sortie assistée et la force de commande mais aussi le rapport entre:
- un dividende: la surface effective de contact de sortie, c'est à dire la surface annulaire 344 sur laquelle se transmettent la force de sortie assistée du servofrein et la force de réaction remontant par la tige de poussée 310,
- un diviseur: la surface de commande, c'est à dire la somme des surfaces annulaires 334 et 336, qui transmet la force de commande 360 et reçoit la force de résistance.

La figure 3c décrit schématiquement l'état du même dispositif de réaction lorsque la force de commande 364 devient supérieure au seuil d'intensité mais l'application de cette force de commande se fait en dessous du seuil de vitesse.

L'application de la force de commande 364 entraîne la génération d'une force d'assistance 366. La pression interne du disque de réaction 302 augmente du fait des forces qu'il subit.

Comme auparavant, le disque de réaction 302 se déforme en envahissant le conduit 308 sur un volume 348 pour compenser son amincissement sur sa partie annulaire subissant la force d'assistance 366.

La force résultante de l'application de la pression interne du disque de réaction 302 sur la surface annulaire 336 de l'anneau 332 (à l'épaisseur de la saillie cylindrique près) devient supérieure à la charge du ressort 328.

Le ressort 328 est donc comprimé et l'anneau 330 vient alors buter contre la butée d'intensité qui est la tête 340 de la vis 318.

Le jeu 324 d'intensité existant en-dessous du seuil d'intensité entre l'anneau 330 et la tête 340 de la vis 318 disparaît.

Par contre, le jeu 322 de vitesse tend à s'agrandir car l'anneau 330 s'éloigne de l'extrémité libre 346 de la saillie 316.

Le jeu 324 disparaissant, la vis 318 étant vissée à la tige de poussée 310 et donc solidaire de cette dernière, la force issue de la pression interne du disque de réaction s'exerçant sur la surface annulaire 336 de l'anneau 330 se déleste sur la tige de poussée 310 au moins en partie et est décomptée de la force de résistance qui se trouve alors réduite.

Le rapport d'assistance augmente donc une fois le seuil d'intensité dépassé car, pour obtenir une même force de sortie, la force de commande 364 nécessaire est réduite grâce à la réduction de la force de résistance.

On peut remarquer aussi que, si la surface de sortie reste constante, la surface de commande diminue car elle devient égale à la seule surface 334, la surface 336 ne transmettant plus la force de commande.

On peut remarquer aussi que, si avantageusement dans cette invention la butée de délestage (dans cette réalisation la tête de vis 340) est solidaire de l'organe de sortie (dans cette réalisation la tige de poussée 310), la partie de la force de résistance délestée une fois le seuil d'intensité atteint, est en fait transmise par le même organe de sortie au travers de l'élément de réaction (dans cette réalisation le disque de réaction 302) à l'organe d'assistance (dans cette réalisation le piston 300) pour venir accroître la partie de la force de réaction absorbée par cet organe d'assistance.

Avantageusement, cette réalisation de l'invention permet aussi d'augmenter le rapport d'assistance quand la vitesse d'application de la force de commande est élevée lors d'un freinage d'urgence.

La figure 3d décrit schématiquement la configuration du dispositif de réaction conforme à cette invention lors d'un freinage d'urgence, dénommé aussi freinage à haute vitesse d'application, qui a été définit précédemment.

L'organe de délestage 304, subissant sur son côté d'entrée une force de commande 368, est poussé rapidement contre le disque de réaction 302, sur un laps de temps court.

Ce laps de temps doit être inférieur au temps, dénommé constante de réaction du servofrein, nécessaire au disque de réaction 302 pour se déformer suite à l'application d'une force de commande 368 au servofrein.

La course de l'anneau 330 vers le disque de réaction 302 est alors limitée par une butée de vitesse conforme à l'invention, qui est, dans cette réalisation, l'extrémité libre 346 de la saillie 316.

Si la force de commande 368 est supérieure à la charge du ressort 328, ce qui est le plus souvent le cas (lors d'un freinage d'urgence le conducteur ne peut doser précisément son freinage et tend à exercer une force de commande 368 importante), le ressort 328 se comprime.

Le reste de l'organe de délestage 304 continue sa course jusqu'à rentrer en contact avec le disque de réaction 302 et peut même (comme dans la figure 3d) pénétrer dans le disque de réaction 302.

Le jeu 322 disparaît donc et la surface 336 de l'anneau 330 ne peut pas rentrer en contact avec le disque de réaction 302.

Le rapport d'assistance augmente par rapport à celui d'un freinage plus lent, car la surface de commande sur le disque de réaction 302 est donc limitée à la surface 334 et la surface effective de sortie étant maintenue constante.

Le conducteur est donc aidé lors du freinage d'urgence.

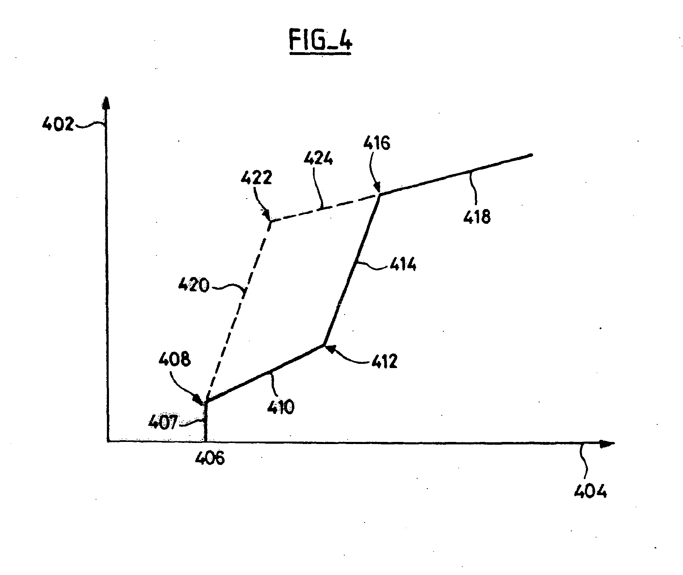

La figure 4 représente une courbe schématique montrant l'évolution de la pression d'un liquide de frein (en ordonnée 402) présent dans un maître-cylindre associé à un servofrein conforme à l'invention (c'est à dire coopérant avec la tige de poussée du servofrein) en fonction de l'intensité de la force de commande (en abscisse 404) exercée sur le servofrein.

La pente de cette courbe indique le rapport d'assistance au freinage du servofrein pour une force de commande donnée.

En dessous d'une valeur 406 d'intensité de la force de commande, aucun freinage n'est en fait commandé: c'est la course morte de la pédale.

A la valeur 406 d'intensité de la force de commande, on observe un saut, le servofrein commençant à apporter de l'assistance sans nécessité d'accroître la pression de commande.

L'accroissement de la pression du liquide de frein en fonction de l'intensité de commande peut suivre deux évolutions différentes.

On détaillera premièrement le cas où la force de commande n'est pas appliquée plus vite que le seuil de vitesse.

Dans ce cas, la portion de courbe 410 en trait continu comprise entre la valeur 406 et jusqu'à la valeur seuil 412 d'intensité, croît selon une certaine pente correspondant à un certaine rapport d'assistance. Le fonctionnement du dispositif de réaction conforme à l'invention est alors semblable à celui décrit dans la figure 3b.

Au delà de la valeur seuil 412 d'intensité et jusqu'à la valeur 416 (état du dispositif de réaction conforme à la figure 3c), le jeu 324 d'intensité disparaît et le rapport d'assistance augmente.

La pente de la portion 414 de la courbe devient plus importante que la pente de la portion 410.

Au delà du point 416, le servofrein arrive à saturation.

Si par contre, la force de commande est appliquée avec une vitesse supérieure au seuil de vitesse, grâce à l'invention, l'évolution de la pression du liquide de freinage en fonction de la force de commande est autre (courbe en pointillés).

Au delà du point 408, le rapport d'assistance au freinage (pente de la portion 420 de la courbe) est tout de suite plus important pour un freinage plus rapide que celui qui correspond à un freinage plus lent utilisant la même force de commande (portion 410).

Au delà du point 422, le servofrein arrive à saturation sur la portion 424.

On peut envisager une réalisation de l'invention sans la saillie cylindrique et avec la tête de vis : cette réalisation de l'invention comprend alors une butée d'intensité mais pas de butée de vitesse.

De même, on peut envisager une réalisation de l'invention où la vis 318 de la figure 3a est remplacée par un élément cylindrique ne comportant pas de saillie interne à l'organe de délestage : cette réalisation de l'invention comprend alors une butée de vitesse (l'extrémité de la saillie cylindrique 316) mais pas de butée d'intensité.

## Revendications

1. Servofrein (200) d'assistance au freinage ayant un axe (201,301) qui, sous la commande d'une force de commande (210,360,364,368) axiale, génère une force de sortie (222,310) assistée axiale, la force de commande étant exercée par un organe de délestage (232,304) sur une surface de commande (334,336) d'un élément de réaction (230,302) élastique, pour que sa face opposée de sortie exerce une force de sortie (223) axiale sur un organe de sortie (222,310), **caractérisé en ce que** l'organe de sortie (222,310) contient des moyens de prolongation (316,318) traversant l'élément de réaction (230,302) et comprenant au moins une butée pour retenir des moyens mobiles (330) de l'organe de délestage (232,304) afin de réduire la surface de commande (334) quand l'intensité de la force de commande (210,364) dépasse un seuil de commande (412) ou quand la vitesse d'application de cette force de commande (210,368) dépasse un seuil de vitesse.

2. Servofrein (200) selon la revendication 1,
**caractérisé en ce que**, les moyens mobiles (330) de l'organe de délestage (232,304) comprennent un anneau (330) formant en partie une face de contact de l'organe de délestage (232,304) en vis-à-vis axial avec une partie de la face d'entrée de l'élément de réaction (230,302) et coulissant axialement sur les moyens de prolongation (318,338,340).

3. Servofrein (200) selon la revendication 2,
**caractérisé en ce que** l'organe de délestage (232,304) contient des moyens élastiques (328) pré-contraints pour exercer une force de rappel axiale sur les moyens mobiles (330), orientée vers l'élément de réaction (230,302) sur l'anneau (330).

4. Servofrein (200) selon la revendication 3,
**caractérisé en ce que** les moyens de prolongation (318,338,340) comprennent une butée d'intensité (340,304), constituée d'une saillie (340) radiale des moyens de prolongation (318,338,340) pour retenir axialement les moyens mobiles (330) quand l'intensité de la force de commande (364) dépasse le seuil de commande (412) et les moyens mobiles (330), subissant une pression de la partie (336) de la face d'entrée de l'élément de réaction (230,302) qui leur est en vis-à-vis axial, compriment les moyens élastiques (328) en rentrant dans l'organe de délestage (232,304).

5. Servofrein (200) selon la revendication 4,
**caractérisé en ce que** les moyens de prolongation (316,318,338) comprennent un élément cylindrique (318), coaxial avec l'axe (201,301), dont une extrémité est fixée à la partie de l'organe de sortie (222,310) en vis-à-vis axial de la face de sortie de l'élément de réaction (230,302), le corps (338) de cet élément cylindrique (318) traversant l'élément de réaction (230,302) et le côté de l'organe de délestage (232,304) en vis-à-vis axial de l'élément de réaction (230,302), l'élément cylindrique (318) présentant un renflement, dénommé tête, à son autre extrémité selon l'axe (201,301), la tête (340) étant la butée d'intensité et étant logée à l'intérieur de l'organe de délestage (232,304).

6. Servofrein (200) selon la revendication 1, 2, 3, 4 ou 5, **caractérisé en ce que** les moyens de prolongation (318,338,340) comprennent une butée de vitesse (346) pour éviter que les moyens mobiles (330) viennent au contact de la face d'entrée de l'élément de réaction (230,302) en les retenant lors d'un freinage, dénommé freinage à haute vitesse de commande, où l'organe de délestage (232,304), poussé par un moyen de distribution (212,314), qui lui transmet la force de commande (368), parcourt au moins en partie la distance (320) le séparant au repos de l'élément de réaction (230,302), avant que ce dernier ne vienne, par déformation sous l'effet d'une force d'assistance (370) générée par le servofrein (200), au contact de l'organe de délestage (232,304).

7. Servofrein (200) selon la revendication 6,
**caractérisé en ce que** les moyens de prolongation (316,318,338) comprennent une saillie cylindrique creuse (316) de la face de l'organe de sortie (222,310) en vis-à-vis axial avec la face de sortie de l'élément de réaction (230,302), la saillie cylindrique creuse (316) étant coaxiale avec l'axe (201,301), traversant l'élément de réaction (230,302) et logeant en partie un élément cylindrique (338) fixé à la partie de l'organe de sortie (222,310) en vis-à-vis axial de la face de sortie de l'élément de réaction (230,302), élément cylindrique (338) sur lequel coulissent les moyens mobiles (330) de l'organe de délestage (304), la saillie cylindrique creuse (316) ayant une longueur telle que, au repos du servofrein (200), l'extrémité libre (346) de cette saillie cylindrique creuse (316) soit comprise entre la face d'entrée de l'élément de réaction (230,302) et les moyens mobiles (330), l'extrémité libre (346) étant la butée de vitesse (346).

8. Organe de sortie (222,310) d'un servofrein (200) d'assistance au freinage recevant d'une face de sortie d'un élément de réaction (230,302) élastique compris dans un dispositif de réaction (218) du servofrein, une force de sortie (223) issue de la pression interne de cet élément de réaction (230,302) soumis sur sa face opposée d'entrée à une force de commande (210,360,364,368) commandant le servofrein (200) sur une surface de commande (334,336) et une force d'assistance générée par le servofrein (200), **caractérisé en ce qu'**il contient des moyens de prolongation (316,318) traversant l'élément de réaction (230,302) pour coopérer avec un organe de délestage (218,304) exerçant la force de commande (210,360,364,368) sur la face d'entrée de l'élément de réaction (230,302) afin de réduire la surface de commande (334) quand l'intensité de la force de commande (210,364) dépasse un seuil de commande (412) ou quand la vitesse d'application de cette force de commande (210,368) dépasse un seuil de vitesse.

9. Organe de sortie (222,310) selon la revendication 8, **caractérisé en ce qu'**il est compris dans un servofrein (200) conforme à l'une des revendications de 1 à 7.

10. Dispositif de réaction (218) d'un servofrein (200) d'assistance au freinage, le dispositif de réaction (200) contenant un élément de réaction (230,302) élastique et un organe de délestage (232,304) qui, le long de l'axe (201,301) du servofrein (200), reçoit une force de commande (210,360,364,368) du servofrein (200) pour l'exercer par son côté de contact sur une surface en vis-à-vis de commande (334,336) d'une face d'entrée de l'élément de réaction (230,302) qui exerce, sur sa face opposée de sortie, une force de sortie (223) à un organe de sortie (222,310), **caractérisé en ce que** le côté de contact de l'organe de délestage (232,304) comprend des moyens mobiles (330) axialement qui, au delà d'un seuil d'intensité de la force de commande (210,364), dénommé seuil de commande (412), ou d'un seuil de vitesse d'application de la force de commande (210,368), dénommé seuil de vitesse, sont retenus, afin de réduire la surface de commande (334), par au moins une butée (340,346) saillante sur des moyens de prolongation (316,318) de l'organe de sortie (222,310) traversant axialement l'élément de réaction (230,302).

11. Dispositif de réaction (218) selon la revendication 10, **caractérisé en ce qu'**il est inclus dans un servofrein (200) selon l'une des revendications de 1 à 7.

## Claims

1. Brake booster (200) having an axis (201, 301) which, under the control of an axial control force (210, 360, 364, 368) generates a boosted axial output force (222, 310), the control force being applied by a load-relieving member (232, 304) to a control surface (334, 336) of an elastic reaction element (230, 302) so that its opposite output face applies an axial output force (223) on an output member (222, 310), **characterized in that** the output member (222, 310) contains extension means (316, 318), passing through the reaction element (230, 302) and comprising at least one end stop to hold the mobile means (330) of the load-relieving member (232, 304) in position so as to reduce the control surface (334) when the intensity of the control force (210, 364) exceeds a control threshold (412) or when the rate at which this control force (210, 368) is applied exceeds a rate threshold.

2. Brake booster (200) according to Claim 1,
**characterized in that** the mobile means (330) of the load-relieving member (232, 304) comprise a ring (330) that in part forms a contact face of the load-relieving member (232, 304) axially facing a part of the input face of the reaction element (230, 302) and sliding axially along the extension means (318, 338, 340).

3. Brake booster (200) according to Claim 2,
**characterized in that** the load-relieving member (232, 304) contains preloaded elastic means (328) for applying an axial return force to the mobile means (330), this force being directed towards the reaction element (230, 302) on the ring (330).

4. Brake booster (200) according to Claim 3,
**characterized in that** the extension means (318, 338, 340) comprise an intensity limit stop (340, 304) consisting of a radial projection (340) of the extension means (318, 338, 340) in order axially to retain the mobile means (330) when the intensity of the control force (364) exceeds the control threshold (412) and the mobile means (330), experiencing a pressure from that part (336) of the input face of the reaction element (230, 302) that faces them axially, compress the elastic means (328), retreating into the load-relieving member (232, 304).

5. Brake booster (200) according to Claim 4,
**characterized in that** the extension means (316, 318, 338) comprise a cylindrical element (318) coaxial with the axis (201, 301) of which one end is fixed to that part of the output member (222, 310) that axially faces the output face of the reaction element (230, 302), the body (338) of this cylindrical element (318) passing through the reaction element (230, 302) and the side of the load-relieving member (232, 304) axially facing the reaction element (230, 302), the cylindrical element (318) having a bulge, termed a head, at its other end along the axis (201, 301), the head (340) being the intensity limit stop and being housed inside the load-relieving member (232, 304).

6. Brake booster (200) according to Claim 1, 2, 3, 4 or 5, **characterized in that** the extension means (318, 338, 340) comprise a rate stop (346) to prevent the mobile means (330) from coming into contact with the input face of the reaction element (230, 302) by holding them back under braking, termed high control rate braking, in which the load-relieving member (232, 304), pushed by a distribution means (212, 314) which transmits the control force (368) to it, covers at least part of the distance (320) which, at rest, separates it from the reaction element (230, 302) before the latter, through deformation under the effect of a boost force (370) generated by the brake booster (200), comes into contact with the load-relieving member (232, 304).

7. Brake booster (200) according to Claim 6,
**characterized in that** the extension means (316, 318, 338) comprise a hollow cylindrical projection (316) of that face of the output member (222, 310) that axially faces the output face of the reaction element (230, 302), the hollow cylindrical projection (316) being coaxial with the axis (201, 301), passing through the reaction element (230, 302) and partially housing a cylindrical element (338) fixed to that part of the output member (222, 310) that axially faces the output face of the reaction element (230, 302), on which cylindrical element (338) the mobile means (330) of the load-relieving member (304) slide, the hollow cylindrical projection (316) having a length such that, when the brake booster (200) is at rest, the free end (346) of this hollow cylindrical projection (316) is contained between the input face of the reaction element (230, 302) and the mobile means (330), the free end (346) being the rate stop (346).

8. Output member (222, 310) of a brake booster (200) receiving, from an output face of an elastic reaction element (230, 302) contained in a reaction device (218) of the booster, an output force (223) originating from the internal pressure of this reaction element (230, 302) subjected, on its opposite, input, face, to a control force (210, 360, 364, 368) controlling the booster (200) on a control surface (334, 336) and a boost force generated by the booster (200), **characterized in that** it contains extension means (316, 318) passing through the reaction element (230, 302) to collaborate with a load-relieving member (218, 304) applying the control force (210, 360, 364, 368) to the input face of the reaction element (230, 302) so as to reduce the control surface (334) when the intensity of the control force (210, 364) exceeds a control threshold (412) or when the rate at which this control force (210, 368) is applied exceeds a rate threshold.

9. Output member (222, 310) according to Claim 8, **characterized in that** it is contained in a brake booster (200) according to one of Claims 1 to 7.

10. Reaction device (218) of a brake booster (200), the reaction device (200) containing an elastic reaction element (230, 302) and a load-relieving member (232, 304) which, along the axis (201, 301) of the booster (200), receives a control force (210, 360, 364, 368) of the booster (200) to apply it, via its contact side, to a facing control surface (334, 336) of an input face of the reaction element (230, 302) which, on its opposite, output, face, applies an output force (223) to an output member (222, 310), **characterized in that** the contact side of the load-relieving member (232, 304) comprises axially mobile means (330) which, beyond an intensity threshold of the control force (210, 364), known as the control threshold (412), or beyond a threshold rate at which the control force (210, 368) is applied, termed the rate threshold, are retained, so as to reduce the control surface (334), by at least one projecting end stop (340, 346) on extension means (316, 318) of the output member (222, 310) passing axially through the reaction element (230, 302).

11. Reaction device (218) according to Claim 10,
**characterized in that** it is included in a brake booster (200) according to one of Claims 1 to 7.

## Patentansprüche

1. Servobremse (200) zur Bremsunterstützung, mit einer Achse (201, 301), die durch die Steuerung einer axialen Steuerungskraft (210, 360, 364, 368) eine axiale unterstützte Ausgangskraft (222, 310) erzeugt, wobei die Steuerungskraft von einem Entlastungsorgan (232, 304) auf eine Steuerungsfläche (334, 336) eines elastischen Reaktionselements (230, 302) ausgeübt wird, damit seine entgegengesetzte Ausgangsfläche eine axiale Ausgangskraft (223) auf ein Ausgangsorgan (222, 310) ausübt, **dadurch gekennzeichnet, dass** das Ausgangsorgan (222, 310) Verlängerungsmittel (316, 318) aufweist, die durch das Reaktionselement (230, 302) verlaufen und mindestens einen Anschlag aufweisen, um bewegliche Mittel (330) des Entlastungsorgans (232, 304) zu halten und die Steuerungsfläche (334) zu verringern, wenn die Intensität der Steuerungskraft (210, 364) einen Steuerungsschwellenwert (412) überschreitet oder die Geschwindigkeit des Aufbringens dieser Steuerungskraft (210, 368) einen Geschwindigkeitsschwellenwert überschreitet.

2. Servobremse (200) nach Anspruch 1, **dadurch gekennzeichnet, dass** die beweglichen Mittel (330) des Entlastungsorgans (232, 304) einen Ring (330) umfassen, der teilweise eine Fläche des Entlastungsorgans (232, 304) für den Kontakt axial gegenüber mit einem Teil der Eingangsfläche des Reaktionselements (230, 302) bildet und axial auf den Verlängerungsmitteln (318, 338, 340) gleitet.

3. Servobremse (200) nach Anspruch 2, **dadurch gekennzeichnet, dass** das Entlastungsorgan (232, 304) vorgespannte elastische Mittel (328) aufweist, um eine axiale Rückstellkraft, die zum Reaktionselement (230, 302) gerichtet ist, auf den beweglichen Mitteln (330) auf dem Ring (330) auszuüben.

4. Servobremse (200) nach Anspruch 3, **dadurch gekennzeichnet, dass** die Verlängerungsmittel (318, 338, 340) einen Intensitätsanschlag (340, 304) aufweisen, der aus einem radialen Vorsprung (340) der Verlängerungsmittel (318, 338, 340) besteht, um die beweglichen Mittel (330) axial zu halten, wenn die Intensität der Steuerungskraft (364) den Steuerungsschwellenwert (412) überschreitet und die beweglichen Mittel (330), die einen Druck von dem Teil (336) der Eingangsfläche des Reaktionselements (230, 302) erhalten, der ihnen axial gegenüberliegt, die elastischen Mittel (328) komprimieren, indem sie in das Entlastungsorgan (232, 304) eindringen.

5. Servobremse (200) nach Anspruch 4, **dadurch gekennzeichnet, dass** die Verlängerungsmittel (316, 318, 338) ein zylindrisches Element (318) aufweisen, das zur Achse (201, 301) koaxial ist und bei dem ein Ende an dem Teil des Ausgangsorgans (222, 310) befestigt ist, das der Ausgangsfläche des Reaktionselements (230, 302) axial gegenüberliegt, wobei der Körper (338) dieses zylindrischen Elements (318) durch das Reaktionselement (230, 302) und die dem Reaktionselement (230, 302) axial gegenüberliegende Seite des Entlastungsorgans (232, 304) dringt, wobei das zylindrische Element (318) in Bezug auf die Achse (201, 301) an seinem anderen Ende eine Kopf genannte Verdickung aufweist, wobei der Kopf (340) der Intensitätsanschlag ist und in dem Entlastungsorgan (232, 304) angeordnet ist.

6. Servobremse (200) nach Anspruch 1, 2, 3, 4 oder 5, **dadurch gekennzeichnet, dass** die Verlängerungsmittel (318, 338, 340) einen Geschwindigkeitsanschlag (346) aufweisen, um zu verhindern, dass die beweglichen Mittel (330) mit der Eingangsfläche des Reaktionselements (230, 302) in Kontakt gelangen, indem er diese bei einer Bremsung hält, die Bremsung mit hoher Steuerungsgeschwindigkeit genannt wird und bei der das Entlastungsorgan (232, 304), das von einem Verteilungsmittel (212, 314) gedrückt wird, das ihm die Steuerungskraft (368) überträgt, zumindest teilweise den Weg (320) zurücklegt, der es im Ruhezustand von dem Reaktionselement (230, 302) trennt, bevor dieses unter der Wirkung einer von der Servobremse (200) erzeugten Unterstützungskraft (370) durch Verformung mit dem Entlastungsorgan (232, 304) in Kontakt gelangt.

7. Servobremse (200) nach Anspruch 6, **dadurch gekennzeichnet, dass** die Verlängerungsmittel (316, 318, 338) einen hohlen, zylindrischen Vorsprung (316) der Fläche des Ausgangsorgans (222, 310), die der Ausgangsfläche des Reaktionselements (230, 302) axial gegenüberliegt, umfassen, wobei der hohle, zylindrische Vorsprung (316) koaxial zur Achse (201, 301) verläuft, durch das Reaktionselement (230, 302) dringt und zum Teil ein zylindrisches Element (338) aufnimmt, das an dem Teil des Ausgangsorgans (222, 310) befestigt ist, das der Ausgangsfläche des Reaktionselements (230, 302) axial gegenüberliegt, wobei auf dem zylindrischen Element (338) die beweglichen Mittel (330) des Entlastungsorgans (304) gleiten und der hohle, zylindrische Vorsprung (316) eine solche Länge hat, dass im Ruhezustand der Servobremse (200) das freie Ende (346) dieses hohlen, zylindrischen Vorsprungs (316) zwischen der Eingangsfläche des Reaktionselements (230, 302) und den beweglichen Elementen (330) liegt, wobei das freie Ende (346) der Geschwindigkeitsanschlag (346) ist.

8. Ausgangsorgan (222, 310) einer Servobremse (200) zur Bremsunterstützung, das von einer Ausgangsfläche eines elastischen Reaktionselements (230, 302), das in einer Reaktionsvorrichtung (218) der Servobremse enthalten ist, eine Ausgangskraft (223) aus dem Innendruck dieses Reaktionselements (230, 302) erhält, das an seiner entgegengesetzten Eingangsfläche einer Steuerungskraft (210, 360, 364, 368), die die Servobremse (200) an einer Steuerungsfläche (334, 336) steuert, und einer von der Servobremse (200) erzeugten Unterstützungskraft ausgesetzt ist, **dadurch gekennzeichnet, dass** es Verlängerungsmittel (316, 318) aufweist, die durch das Reaktionselement (230, 302) dringen, um mit einem Entlastungsorgan (218, 304) zusammenzuwirken, das die Steuerungskraft (210, 360, 364, 368) auf die Eingangsfläche des Reaktionselements (230, 302) ausübt, um die Steuerungsfläche (334) zu verringern, wenn die Intensität der Steuerungskraft (210, 364) einen Steuerungsschwellenwert (412) überschreitet oder die Geschwindigkeit des Aufbringens dieser Steuerungskraft (210, 368) einen Geschwindigkeitsschwellenwert überschreitet.

9. Ausgangsorgan (222, 310) nach Anspruch 8, **dadurch gekennzeichnet, dass** es in einer Servobremse (200) nach einem der Ansprüche 1 bis 7 enthalten ist.

10. Reaktionsvorrichtung (218) einer Servobremse (200) zur Bremsunterstützung, wobei die Reaktionsvorrichtung (200) ein elastisches Reaktionselement (230, 302) und ein Entlastungsorgan (232, 304) aufweist, das entlang der Achse (201, 301) der Servobremse (200) eine Steuerungskraft (210, 360, 364, 368) der Servobremse (200) erhält, um diese über seine Kontaktseite auf eine gegenüberliegende Steuerungsfläche (334, 336) einer Eingangsfläche des Reaktionselements (230, 302) aufzubringen, das an seiner entgegengesetzten Ausgangsfläche eine Ausgangskraft (223) auf ein Ausgangsorgan (222, 310) ausübt, **dadurch gekennzeichnet, dass** die Kontaktseite des Entlastungsorgans (232, 304) axial bewegliche Mittel (330) aufweist, die jenseits eines Schwellenwerts der Intensität der Steuerungskraft (210, 364), Steuerungsschwellenwert (412) genannt, oder jenseits eines Schwellenwerts der Geschwindigkeit des Aufbringens der Steuerungskraft (210, 368), Geschwindigkeitsschwellenwert genannt, zurückgehalten werden, um die Steuerungsfläche (334) über mindestens einen vorstehenden Anschlag (340, 346) auf den Verlängerungsmitteln (316, 318) des Ausgangsorgans (222, 310), die axial durch das Reaktionselement (230, 302) dringen, zu verringern.

11. Reaktionsvorrichtung (218) nach Anspruch 10, **dadurch gekennzeichnet, dass** sie in einer Servobremse (200) nach einem der Ansprüche 1 bis 7 enthalten ist.
